# EUROPEAN PATENT SPECIFICATION

(11) **EP 3 784 543 B1**
(45) Date of publication and mention of the grant of the patent: **07.06.2023**
(21) Application number: 19719847.6
(22) Date of filing: 24.04.2019
(51) Int. Cl.: B61B 13/10

(54) **EVACUATED TUBE TRANSPORT SYSTEM TUBE AND USE THEREOF**
ROHRSEGMENT FÜR EVAKUIERTES ROHRTRANSPORTSYSTEM
SEGMENT DE TUBE POUR SYSTÈME DE TRANSPORT DE TUBE SOUS VIDE

(30) Priority: 24.04.2018 EP 18020173; 02.05.2018 EP 18170455
(43) Date of publication of application: 03.03.2021
(73) Proprietor: Tata Steel Nederland Technology B.V., 1951 JZ Velsen-Noord (NL)
(72) Inventor: DE VRIES, Paul Alexander, 1970 CA IJmuiden (NL)
(74) Representative: Group Intellectual Property Services
(86) International application number: PCT/EP2019/060475
(87) International publication number: WO 2019/206973

(56) References cited:
- EP-A1- 2 581 517
- GB-A- 979 312
- GB-A- 1 049 264
- US-A- 3 171 517

## Description

### Field of the invention

This invention relates to an evacuated tube transport system tube and use thereof.

### Background of the invention

A hyperloop is a proposed mode of passenger and/or freight transportation, first used to describe an open-source vactrain design released by a joint team from Tesla and SpaceX. Drawing heavily from Robert Goddard's vactrain, a hyperloop comprises a sealed tube or system of tubes through which a pod may travel free of air resistance or friction conveying people or objects at high speed and acceleration. Elon Musk's version of the concept, first publicly mentioned in 2012, incorporates reduced-pressure tubes in which pressurized capsules ride on air bearings driven by linear induction motors and air compressors. The tubes would run above ground on columns or below ground in tunnels to avoid the dangers of grade crossings. The concept would allow travel which is considerably faster than current rail or air travel times. An ideal hyperloop system will be more energy-efficient, quiet, and autonomous than existing modes of mass transit.

Developments in high-speed rail have historically been impeded by the difficulties in managing friction and air resistance, both of which become substantial when vehicles approach high speeds. The vactrain concept theoretically eliminates these obstacles by employing magnetically levitating trains in evacuated (airless) or partly evacuated tubes, allowing for very high speeds. The principle of magnetic levitation is disclosed in US1020942. However, the high cost of magnetic levitation and the difficulty of maintaining a vacuum over large distances has prevented this type of system from ever being built. The Hyperloop resembles a vactrain system but operates at approximately one millibar (100 Pa) of pressure and can therefore be described as an evacuated tube transport (ETT) system as disclosed in general terms in US5950543.

The document GB1049264A discloses a further evacuated tube transport system.

An Evacuated Tube Transport system (ETT) solves many problems associated with classic transport by moving all obstacles from the path of travel and not allowing their return. Once the path is evacuated and free from obstacles, travel can take place unimpeded. The object traveling (in this case a capsule) is in a tube so it stays on the intended path and no obstacles can get on the path. If subsequent capsules undergo identical acceleration and deceleration, many capsules can travel the same direction in the tube at once with complete safety. Acceleration and deceleration are planned to prevent the capsule from becoming an obstacle to subsequent capsules. The reliability of the capsules is very high due to minimal or no reliance on moving parts. Most of the energy required to accelerate is recovered during deceleration.

One of the important elements of an ETT-system is the tube. These tubes require a large diameter for allowing the pods containing the freight or passengers to pass through. The main requirement of the tube is that it must be evacuated. The pressure in the tube is about 100 Pa, so it must be able to withstand the pressure from the surrounding atmosphere. The atmospheric pressure is about 101 kPa, so about 1000 times the pressure in the tube. As the tubes above ground would often be supported (e.g. by columns) the tube must also be able to span the gap between two supports without bending or buckling. According to the full proposal of the Hyperloop Alpha project a tube wall thickness between 20 to 23 mm is necessary to provide sufficient strength for the load cases considered such as pressure differential, bending and buckling between pillars, loading due to the capsule weight and acceleration, as well as seismic considerations for a passenger tube. For a passenger plus vehicle tube the tube wall thickness for the larger tube would be between 23 to 25 mm. These calculations are based on a tube having an internal diameter of 3.30 m. However, calculations have also shown that the economics of the ETT-system can be much improved by increasing the pod size travelling through the tube. These increased pod sizes require an internal diameter in the order of 3.50 to 5.00 meter. If these diameters of tube are produced from steel, then this requires a thickness in the order of 30 mm. No hot strip mill is able to supply material of this thickness, and therefore these tubes would have to be produced from plate. With the proposed wide spread use of the ETT system and steel as the preferred material for the tube, this would require approx. 3000 ton/km x 20000 km = 60 Mton. Currently the total production of plate in EU28 is about 10 Mton/year. Apart from this capacity problem it is clear that producing tubes from plate requires an enormous amount of cumbersome handling and shaping on-site and welding of the plate, as well as that the tubes become very heavy. A 5 m diameter tube of 30 mm thick steel weighs 3700 kg/m, meaning that segments of 10 m weigh 37 tonnes. The payload of a Mi-26 helicopter is about 22 tonnes. Transport via the road is impractical in view of viaducts or other restrictions.

Buckling refers to the loss of stability of a structure and in its simplest form, is independent of the material strength where it is assumed that this loss of stability occurs within the elastic range of the material. Slender or thin-walled structures under compressive loading are susceptible to buckling.

### Objectives of the invention

It is the object of the invention to provide a tube for an ETT-system that is lighter than a conventionally produced tube, which is not susceptible to buckling.

It is a further object of the invention to provide a tube for an ETT-system that can be produced on-site.

It is a further object of the invention to provide a tube for an ETT-system that can be transported over the road easily.

### Description of the invention

One or more of these object is reached with an evacuated tube transport system tube, which in use is near vacuum, comprising a plurality of tube segments, with an internal diameter of at least 3 m, wherein the tube segments consist of a single-walled metal tube and wherein the surface of the tube is provided with protruding or intruding reinforcements against buckling. In the context of this invention wherein the pressure outside the tube is the atmospheric pressure of about 101 kPa (1 bar), near vacuum means that the pressure inside the tube is less than 10 kPa (≈0.1 bar), preferably less than 1 kPa (≈0.01 bar or 10 mbar), even more preferably less than 500 Pa (≈5 mbar) or even less than 200 Pa (≈2 mbar), or even about 100 Pa (≈1 mbar).

Preferable embodiments are provided in the dependent claims.

A **tube** for an ETT is divided into **tube segments** of a manageable size. The tube segment according to the invention is therefore fixedly connected to other tube segments to form said tube. The connection between the tube segments must be air tight so as to allow a low pressure to exist in the tube. This airtightness may be provided by the connection itself, i.e. as a result of welding, or by some compound between the tube segments, such as an elastomer, when the tube segments are bolted or clamped together.

A tube segment of between 10 and 30 m can be transported through air, train or on a lorry. The internal diameter of the tube segment is at least 3 m. A suitable upper boundary for the diameter is 5 m, although this is not a limitation per se. If the tube segment is strong and stiff enough, diameters of larger than 5 m are conceivable without deviating from the gist of the invention as claimed.

A single walled tube (segment) without any reinforcements against buckling needs to be constructed from thick flat material, e.g. spiral-welded steel strip. For a 4 m diameter tube the thickness of the strip of E420 HSLA steel is already 15 mm for a safety factor of 1. A safety factor of 2 increases the thickness to 20 mm. This thickness is in the upper range of the hot-strip mills capability. Also, a 15 mm tube segment of 30 m in length and of 4 m in diameter already weighs 45 tonnes.

So there is a strong incentive to reduce the weight of the tube segment and this can be achieved by providing the tube segment with protruding or intruding reinforcements against buckling.

In an embodiment the reinforcement against buckling are intruding dimples in the surface of the tube. Intruding means that the dimples locally reduce the internal diameter of the tube and are therefore referred to as inwardly oriented dimples. The deformation of the tube by the dimples and the shape of the dimpled surface increase the resistance against buckling compared to the undimpled tube. The shape of the dimples is not particularly restrictive, but it is advantageous to provide the dimples in a regular pattern. This regularity provides the strip with a predictable behaviour, and the dimples can be applied by means of a technology like roll forming or pressing. The depth of the dimples can be tailored to the specific case. Deeper dimples will have a larger effect at the expense of processability during production of the dimples and the resulting tube segment. Deeper dimples will be more difficult to apply, and a strip with a deeper dimple will be more difficult to shape into a tube segment. The dimples can be applied in the tube segment, but it is preferable to apply the dimples beforehand in the as-rolled steel strip, which may be hot-rolled, optionally galvanized and/or organically coated, or cold-rolled, annealed and optionally galvanized and/or organically coated. The as-rolled or as-coated steel strip is usually provided in the form of a coiled steel strip. If the tube segment is produced on site using a more or less mobile production facility for dimpling and producing the tube segment from the dimpled strip, then the transport problem is largely solved, because transporting coils by road is not a problem.

In an embodiment the dimples in the tube segment and the resulting tube are circular, elliptic or polygonal wherein the number of sides in the polygon is 5 or more. The circular dimples are comparable in shape (not in size) with the dimples in a golf ball. It may be advantageous to use elliptic dimples, wherein a long and a short axis is present in the dimple (in a circular dimple the axes are equal). The dimples may all be oriented in the same direction, or there may be dimples that are oriented differently (cf treadplate).

The dimples may also have a shape that is polygonal wherein the number of sides in the polygon is 5 or more. The shape of the polygonal may be approximate because the edges of the polygonal may be smoothened to avoid sharp indentations which may act as stress concentrators. So, in case of a regular hexagonal dimple, the angle between two edges is 60°, but the transition from one edge to the adjacent edge may be performed according to a radius of curvature to smoothen the transition. In this context the "radius of curvature" means the approximate extent of the rounding as distinct from a precise geometrical form.

In a preferable embodiment the dimples have a hexagonal shape. This shape is preferable because it is possible to cover the entire tube surface with the dimples, thereby maximising the strengthening effect.

In an embodiment the reinforcements against buckling are circumferential or helical beads in the surface of the tube. In the context of this invention helical or spiralling beads or flanges differ from circumferential beads or flanges in that a circumferential bead or flange is closed in itself, whereas a spiralling or helical bead or flange is not closed in itself. These beads are preferably in the form of a wave or sine form with a top and trough wherein the tangent in the top and trough of the bead in the longitudinal direction of the tube is zero ("smooth beads"). These beads can be applied into the as-rolled steel strip, which may be hot-rolled, optionally galvanized and/or organically coated, or cold-rolled, annealed and optionally galvanized and/or organically coated e.g. by means of roll-forming. Simultaneously or subsequently the roll-formed strip is bent or roll-formed in a shape suitable for forming the tube. If the roll-formed strip is subsequently spiral welded into a tube, then the beads become helical beads. Circular beads can be obtained if the roll-formed strip is welded into a cylindrical short tube sub-segment. **Short tube subsegments** (STS) are closed rings that can be joined together to form a tube segment. For example, 20 short tube subsegments of 1.5 m long form a 30 meter long tube segment. It is also possible to provide the beads into the tube after the tube has been welded together (spiral welding or otherwise) by means of a dedicated beader apparatus.

In an embodiment the tube segment consists of annular or helical u-shaped, v-shaped, semi-circular-shaped, catenary or semi elliptic-shaped profiles wherein the profiles are fixedly attached to the adjacent profile in such a way that the upstanding sides of the profiles are extended outwardly to form the reinforcements against buckling. In this embodiment the as-rolled steel strip, which may be hot-rolled, optionally galvanized and/or organically coated, or cold-rolled, annealed and optionally galvanized and/or organically coated e.g. is formed into a profile, e.g. by means of roll-forming. This profile has a cross-section over the width of the strip of a half-circle (180°, u) or part of a half-circle (< 180°) or flattened circles, catenary or elliptic cross sections. Other suitable cross sections are V-shaped or 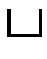 -shaped profiles. All suitable shapes are characterised by upstanding edges and a recessed part between the edges. These profiles are bent or formed into a helix curve with full twist loops of about the same diameter as the tube to be formed (i.e. at least 3 m). There may be some space between the loops, or subsequent loops may be so close together that the compressive tension presses the loops together as in a tension spring. Adjacent loops will have touching upstanding edges, and in the tube segment according to the invention one edge of a loop is fixedly attached to the edge of the adjacent loop, thereby interconnecting all loops to its adjacent loop and thus forming a helical tube segment. Depending on the shape of the profile the upstanding edges to be joined together are parallel at the edges (i.e. angle between the two adjoining edges is about 0°, or there is an angle larger than 0, but always smaller than 180°, and preferably smaller than 90°, more preferably smaller than 60° and even more preferably smaller than 45°. Preferably the angle is at least 5°, more preferably at least 10°. The buckling resistance is greatly increased by the presence of these joined edges which form a helical upstanding flange around the tube. In case the tube segments are less stiff then required, then they may need additional longitudinal strengthening or support to prevent excessive sagging in between supports or pillars onto which the tube segments rest.

In an embodiment the edges are welded together. This provides a gastight connection and secures possibility of maintaining the low pressure in the final ETT formed from the tube segments according to the invention. In an alternative embodiment the edges are flanged together, with or without a compound in the flange to ensure the gastight connection. Depending on the specifics of this flanging operation it may be needed to prepare the flanges in such a way as to allow the flanging operation. For instance, if a zip-type flange is to be used, which requires the presence of two interlocking flanges, usually of the male-female type, then these flanges must be provided with the appropriate shape. It is also possible to flange the edges together starting from straight edges.

In an embodiment the tube segment is a polyhedral helical tube and the reinforcements against buckling are the ribs of the triangles making up the polyhedral helical tube.

The word "polygon" means "many-angled". Individual polygons are named according to the number of sides, combining a Greek-derived numerical prefix with the suffix -gon, e.g. pentagon, dodecagon. However, mathematicians generally use numerical notation, for example 6-gon for a hexagon, and 12-gon for a dodecahedron.

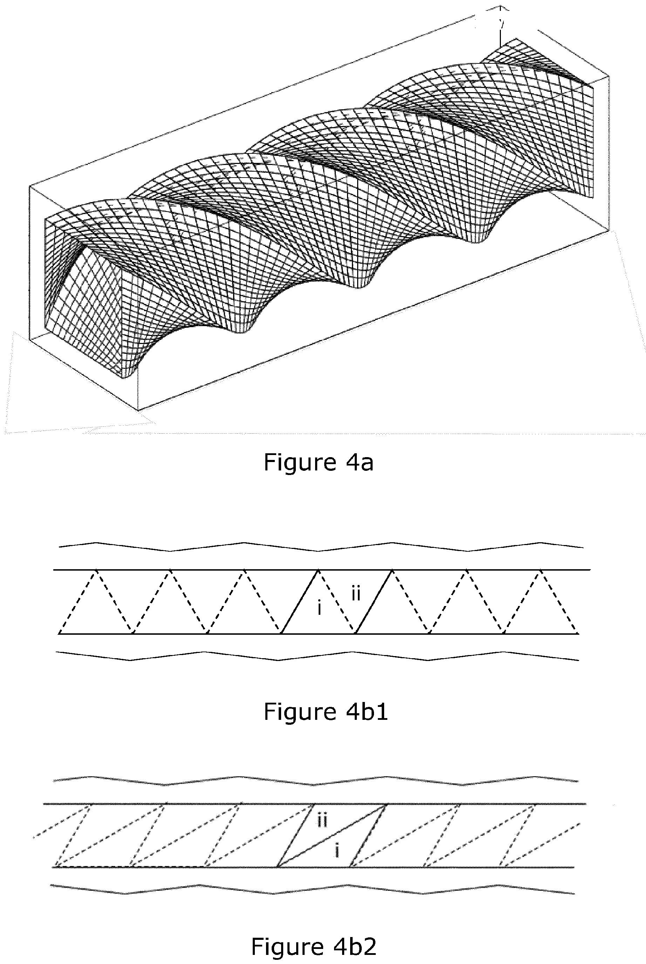

An ideal polyhedral helical tube is a polyhedral tube that is twisted along its longitudinal axis and which has smooth facets. Figure 4a shows a sketch of such an ideal polyhedral helical tube on the basis of a square (4-gon). A square tube has four surfaces (top, bottom, left and right) which are long rectangles in figure 4a. Bu twisting the tube a helical tube is formed. Figure 4a shows such a helical tube wherein the front surface is twisted over 360° in relation to the back surface. The original long rectangles have now become curved surfaces, and these curved surfaces are smooth and show no discontinuities. However, it is not practically feasible to produce such a twisted polyhedral helical tube on an industrial and economical scale, because the twisted long rectangles have been deformed during the twisting and when flattened are no longer straight long rectangles and the edges of the square tube undergo a much more severe deformation than the centreline of the surfaces. This is clearly demonstrated by the difference in size and shape of the grid imposed on the polyhedral helical tube in figure 4a. To produce such a polyhedral helical tube from strip material would require forming the strip material into the twisted shape and joining it at the edges.

The polyhedral helical tube according to the invention is an approximation of this ideal polyhedral helical tube which can be produced from strip material without having to deform the material differently over the width of the strip, but can be produced by providing upward en downward kinks in a strip material thereby forming pairs of triangles which pair of triangles forms a parallelogram with two sides of the parallelogram being parallel to the edges of the strip material. In its simplest form the strip is kinked over the entire width over the dashed lines from side to side as depicted in figure 4b1. The edge of the material as seen from one side and the other is also depicted which shows that one kink is upwards and the next is downwards. The pair of triangles i and ii form a parallelogram with two of its edges parallel to (and in this case coinciding with) the edges of the strip. So in terms of the circumscribed parallelogram consisting of the pairs of triangles the (short) diagonal of the parallelogram separating triangle i from triangle ii is kinked as well (see 4b1). The pairs of triangles i and ii may be pairs of equilateral triangles (a=b=c), or pairs of isosceles triangles (a=b # c), or triangles with three different lengths of sided (a # b # c), wherein a, b and c is the length of the sides of the triangle. In figure 4b1 the triangles are equilateral triangles and the circumscribed parallelogram has sides of a and a. In 4b2 the triangles are isosceles triangles and the circumscribed parallelogram has sides of a and a. For irregular triangles having three different sides a, b and c the circumscribed parallelogram has sides of a and b, or b and c, or a and c, depending on which side of the triangle forms one of the diagonals in the parallelogram.

On the basis of this kinked strip the polyhedral helical tube according to the invention can be produced.

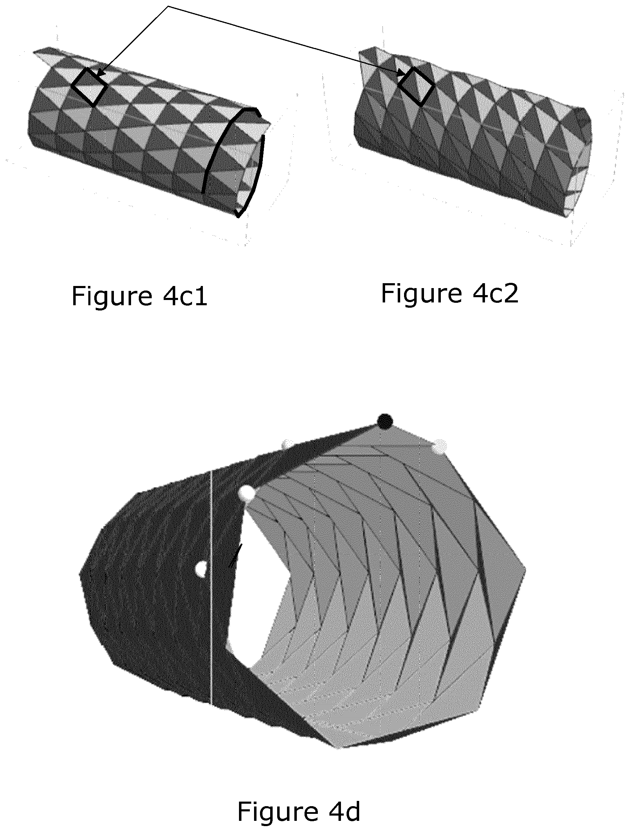

Figure 4c1 shows a tube according to the invention produced on the basis of the kinked strips of figure 4b1 consisting entirely of kinked strip material. By feeding the kinked material into a spiral welding device the kinked strip is forced into the curvature of the polyhedral helical tube before welding, not by curving the triangles by using the kinks. By simultaneous rotating and welding each triangle i will be welded to a triangle ii on the previous loop. This construction leads to a loop having a length of 12.5 triangle basis. When viewed in the flat plane, this would be considered an irregular 12.5-gon. There are 12.5 dark triangles to complete one full loop.

The parallelogram in 4b2 is the same as in 4b1 but the pair of triangles is different. The triangles are now isosceles triangles, and not equilateral triangles. Here again the parallel edges of the parralellogram of triangle i and ii are kinked as well as the (long) diagonal of the parallelogram separating triangle i from triangle ii. When producing a polyhedral helical tube in the same way as with the tube in 4b1 a complete loop will have a length of 11.5 triangle basis. When viewed in the flat plane, this would be considered an irregular 11.5-gon. Because of the different connection of the triangles in 4c2 one loop along the connection between one loop and the next is an 11.5-gon.

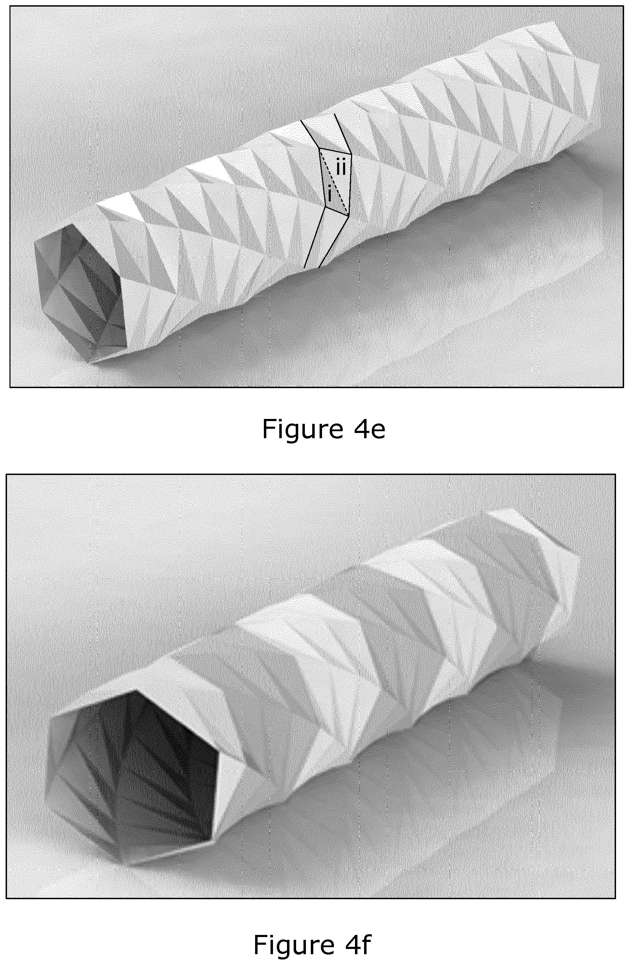

So both tubes of figure 4c1 and 4c2 can be produced by spiral welding a kinked flat strip wherein the kinks are pairs of equal triangles. In figures 4c1 and 4c2 these are highlighted. However, because the shape of the pairs of triangles in 4c2 is different from that in 4c1 (but the circumscribed parallelogram of the pairs of triangles is the same!), the depth of the kinks is also larger for 4c2, and thus the apparent thickness of the tube increases, which increases the resistance to buckling. In Figure 4d this apparent thickness effect is visualised for the helical hexagonal tube where the kinks intrude into the tube more substantially than in the helical dodecahedral tube. This is also apparent on the outer surface of the tube (compare figure 4c1 with figure 4e). In figures 4c1 and 4c2 it is clearly visible that the polyhedral helical tube can be produced by spiral-welding one strip, that is provided with the kinks forming the triangles, and optionally also already the curve forming the tube, beforehand by a suitable bending or roll-forming apparatus. In figure 4f it is shown that the helical hexagonal tube can be produced by spiral welding two kinked strips simultaneously. The two kinked strips can be built up from individual strips first (in figure 4b three strips could be welded together to produce one kinked strip) or the wide strip can be kinked in a suitable bending or roll-forming apparatus so that the up and downward kinks are already present in the strips before starting the spiral welding.

So the tube polyhedral helical tube according to the invention is not twisted after producing the tube, but twisted as a result of the fact that the strips are provided with kinks in a triangular pattern which "pop" into the right direction (inwardly or outwardly) while the edges of the strips are joined together. The presence of the kinks form the elements that contribute to the increase in buckling resistance of the polyhedral helical tube. The kinks that pop inwardly are the intruding reinforcements against buckling, the kinks that pop outwardly are the protruding reinforcements against buckling. The intruding and protruding kinks provide a thicker apparent thickness of the strip and that is what contributes to the buckling resistance. The intruding kinks of the 11.5-gon of figure 4c2 are deeper than the intruding kinks of the 12.5-gon of figure 4c1. The apparent thickness of the 11.5-gon is consequently higher and therefore the resistance against buckling is also higher.

Figure 4e shows a polyhedral helical tube consisting of, in this example, a hexagon (6-gon) that is perpendicular to the longitudinal axis of the tube that is rotated along its centre while moving along this longitudinal axis. The ideal polyhedral helical tube would have six smoothly curved surfaces with the 6 corners of the hexagon each forming a perfect helix (like in figure 4a for the 4-gon). In the polyhedral helical tube according to the invention the plane between each of the neighbouring helix is again filled with equal triangles (i and ii) as depicted in figure 4e. One sets of equal triangles is highlighted. Figure 4b shows the same polyhedral helical tube in which the spirals run orthogonal to the six strips. This shows that the same polyhedral helical tube can be made using conventional spiral welding using one or more spiral welding machines.

The polyhedral helical tube according to the invention is not limited to any particular number of sides, as long as the pairs of triangles provide increased resistance to buckling of the polyhedral helical tube. The lowest value for the polyhedral helical tube on the basis of a regular polyhedron is the 3-gon (triangle). However, the 3-gon (triangle) and 4-gon (square) are not very practical because the apparent thickness is so large that the space in the tube is small, compared to higher value x-gons which already approach the circular cross section more closely.

The maximum value for x in x-gon is the value in which no significant strengthening effect is obtained. The higher the value of x, the more the tube resembles a cylindrical tube, and there the increase in apparent thickness provided by the triangles is reduced to a value that is no longer relevant. Again, preferably the polyhedral helical tube is, as seen along the connection between two consecutive loops of the helix is at least a 6-gon, more preferably an 7-gon. Even more preferably the polyhedral helical tube is at least a 10-gon. A suitable upper value is a 20-gon, preferably at most a 15-gon. In this case the value x in x-gon need not be a natural number but can be a rational number as well. The x in x-gon also represents the number of triangle bases required for one loop of the helix. If the length of one loop is 12.5 triangles bases, then the x-gon is a 12.5 gon.

The strip material is preferably provided as as-rolled steel strip, which may be hot-rolled, optionally galvanized and/or organically coated, or cold-rolled, annealed and optionally galvanized and/or organically coated. The as-rolled or as-coated steel strip is usually provided in the form of a coiled steel strip.

The process to produce the polyhedral helical tube optionally comprises levelling a strip which is usually provide in the form of a coiled strip, optionally end cut and welded to a preceding strip, provided with kinks so as to form pairs of equal triangles, wherein each pair of triangles forms a parallelogram wherein two of the parallel edges of the parallelogram are parallel to the edges of the strip and wherein the other two parallel edges of the parallelogram and a diagonal of the parallelogram is kinked consecutively upwardly and downwardly, spiral welding the strip to form an polyhedral helical tube. The simplest procedure is to produce the polyhedral helical tube on the basis of pairs of equal triangles wherein the kinks run from one edge to the other edge of the strip, so that a pair of triangles occupies the entire width of the strip, as depicted in figure 4b1 and 4b2. It is also possible to produce a kinked strip with two or more rows of pairs of equal triangles. However, due to the presence of upward and downward kinks in one sheet, it will be more difficult to bend and weld.

It is further believed that the particular shape of the polyhedral helical tube may reduce the need for expansion joints because it is able to absorb some or all of the expansion itself, particularly if the tube segments are alternating clockwise and anticlockwise helical tube segments.

In the tube according to the invention the rails and other auxiliary equipment needs to be installed for the ETT to function. The rails and other auxiliary equipment may be mounted in the tubes with the help of support structures which may have the form of a ring through which the pod may travel and onto which additional support structures, the auxiliary equipment and the rails may be mounted. If suitably shaped these ringlike support structures may function as additional stiffening and anti-buckling elements. Ideally the tube according to the invention needs to be supported only at limited intervals of, for example 30 meters. However, if necessary, additional support means may be provided to support the tube. These additional support means may comprise a steel beam or structure, or a concrete beam or structure. It is specifically noted that the rails and the other auxiliary equipment are not to be considered as intruding or protruding reinforcements against buckling, because the rails and the other auxiliary equipment serve another purpose and are not intended as intruding or protruding reinforcements against buckling. It is clear however that the tube according to the invention needs to be able to withstand buckling with rails and other necessary auxiliary equipment present to enable functioning as an ETT-tube. The invention is based on the notion that without the intruding or protruding reinforcements against buckling the tube would need to be constructed from thicker material to withstand buckling and support the rails and other auxiliary equipment and thus have a larger carbon footprint than the tube according to the invention.

In an embodiment the surface of the tube is provided with intruding reinforcements against buckling. These reinforcements can be flanges which have been formed by bending one or both edges of a steel strip to an angle of about 90° to form an upstanding flange. These steel strips can be processed into a tube either by spiral-welding the strip into a tube, in which case the flanges form a helical flange in the interior of the tube, or by producing short tube segments, i.e. rings, and welding these rings together to form a tube segment. The flanges then form a ring-like flange in the interior of the tube. If both edges of the short tube segments are provided with flanges, these flanges could be welded together or connected otherwise. One or both edges of the strip can be flanged, so that the flange may consist of once or twice the thickness of the strip material. Measure must be taken to prevent the flanges from creasing during forming of the flange or the bending of the flanged strip during spiral welding. The flanges may also be provided in the form of rings which are mounted in the tube after forming the tube as referred to above as ring-like support structures. Both the height of the flanges and the pitch (distance between the flanges) are relevant for the buckling resistance, wherein increasing the height of the flange appears to be more effective than reducing the pitch. If the need arises the number of flanges can be increased to increase the buckling strength. In an embodiment the pitch is smaller in the middle of the tube segment (i.e. between the pillars or support) than at the ends of the tube, where the tube segments are connected. It was found that for a tube segment with a radius of 2000 mm (diameter 4 m) the height of the flange is preferably at least 50 mm, more preferably at least 60 mm and even more preferably about 70 mm. The higher the flange the more effective they are for resinising buckling, but this goes at the expense of the effective diameter of the tube segment, because the flanges reduce the effective diameter of the tube segment by D-2 x flange height. This proved to be equally valid for larger or smaller diameters, so the height of the flanges is at least 2%, and at most 7.5% of the internal radius of the tube segment, preferably at most 5%, more preferably at most 4%. The pitch of the flanges is at least 20% of the internal radius of the tube segment, and at most 80%. Preferably the pitch is at least 25% of the internal radius of the tube segment. For an internal diameter of 4 m a pitch of 1000 mm and a flange height of 70 mm was instrumental in reducing the weight of a single walled tube from 59 tonnes for a 20 mm spiral welded tube segment of 30 m to a 19 tonne 6.35 mm thick tube consisting of 30 1000 mm wide short tube segments (pitch = 1000 mm, which is 50% of the internal radius) with internal flanges of 70 mm high (3.5% of the internal radius of 2000 mm). The resulting effective diameter is then 4000 - 140 = 3860 mm. It is noted that the flanges may be provided in the short tube segments by bending or forcing the edges of the strip to the edges of the short tube segments into a flange or, alternatively, by welding a ring-like flange in a tube (comprising e.g. spiral-welded tube segments or tube segments consisting of short tube segments without flanges), in which case the material of the flange is not necessarily the same as the material of the tube.

According to a third aspect the invention is also embodied in the use of an evacuated tube transport system tube according to any one of claims 1 to 10 in an evacuated tube transport system wherein the pressure inside the tube is less than 10 kPa. Preferably the pressure inside the tube is less than 1 kPa (≈0.01 bar or 10 mbar), even more preferably less than 500 Pa (≈5 mbar) or even less than 200 Pa (≈2 mbar), or even about 100 Pa (≈1 mbar).

The tube according to the invention is intended for an evacuated tube transport system. However, the specific properties of the tube segment, and in particular its ability to perform under conditions wherein the pressure exerted on it from outside the tube produced from these tube segments is significantly higher than the pressure in the tube make it also suitable for the application of tubes operating under similar pressure conditions (there is underpressure in the tube segment). Examples of these applications are underground or underwater tunnels for traffic such as bicycle tunnels, car tunnels, train tunnels, maintenance tunnels or shafts, tubes in hydro-electric power stations, gas storage systems in which underpressure occurs or may occur, etc.

### Brief description of the drawings

The invention is now further explained by means of the following, non-limitative drawings.

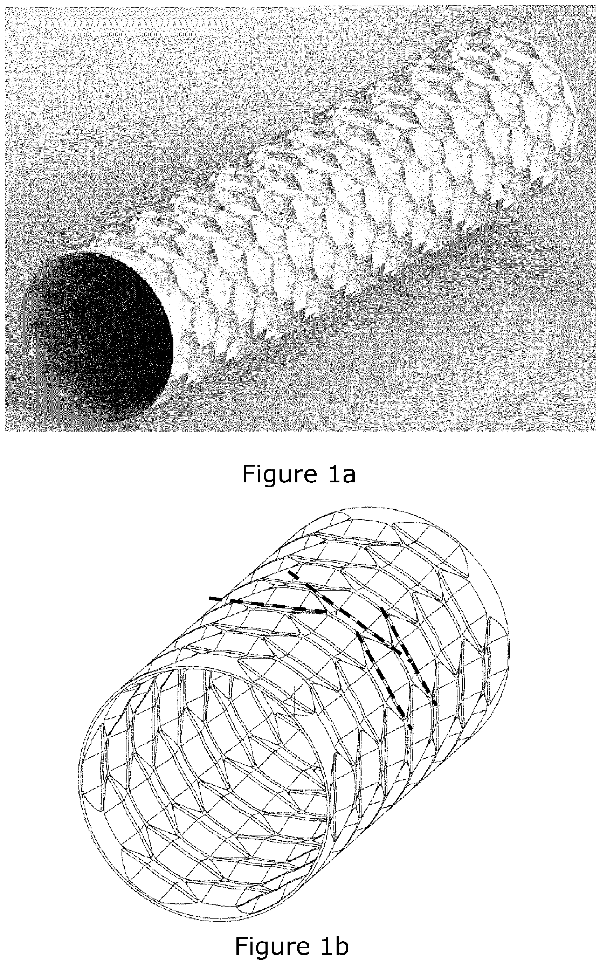

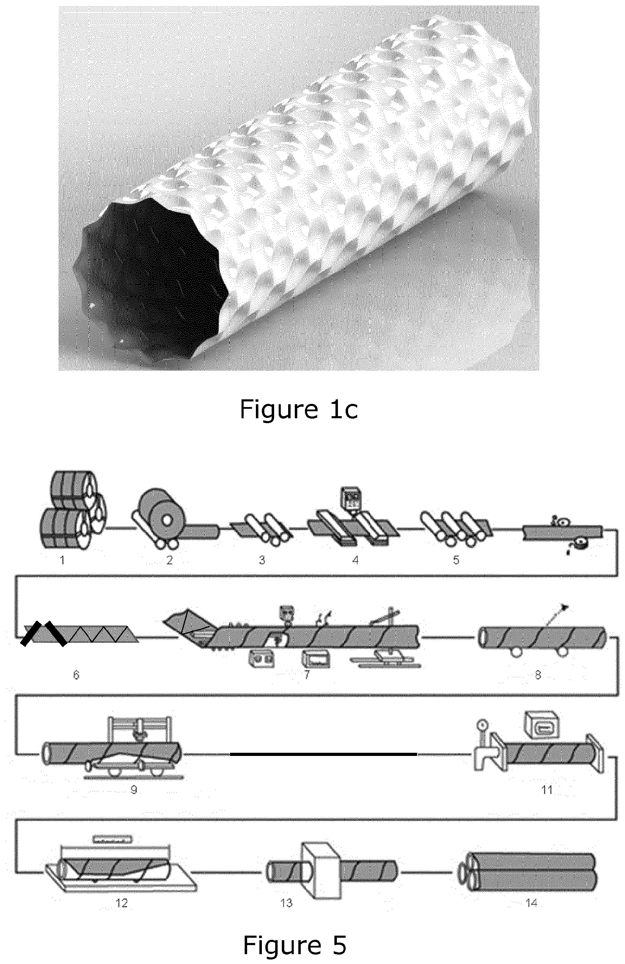

In figure 1a and 1b in which examples are shown of a tube provided with intruding dimples in the surface of the tube. In the examples the dimples have a hexagonal shape, but it is easy to imagine that the dimples have a circular or other shape. The dimples protrude inwardly in this example, and this is the embodiment which is easiest to produce in practice, but the dimples could also be protruding outwardly and have a buckling strength enhancing capability. The hexagonal dimples in figure 1a are of a different shape as the hexagonal dimples in figure 1b. Firstly the pattern is rotated 90°, but the dimples in figure 1a are craterlike, having a point-symmetry around the centre of the crater, whereas the dimples in 1b have a line-symmetry in the direction of the circumference of the tube (indicated in some of the dimples with the dashed line). Of course the pattern of figure 1a and 1b can be rotated 90°, or over any other suitable angle. In figure 1c a tube provided with intruding dimples in the surface of the tube is shown wherein the dimples are dome shaped or crater like, but with smoother transfer from dimple to dimple in comparison to figure 1a.

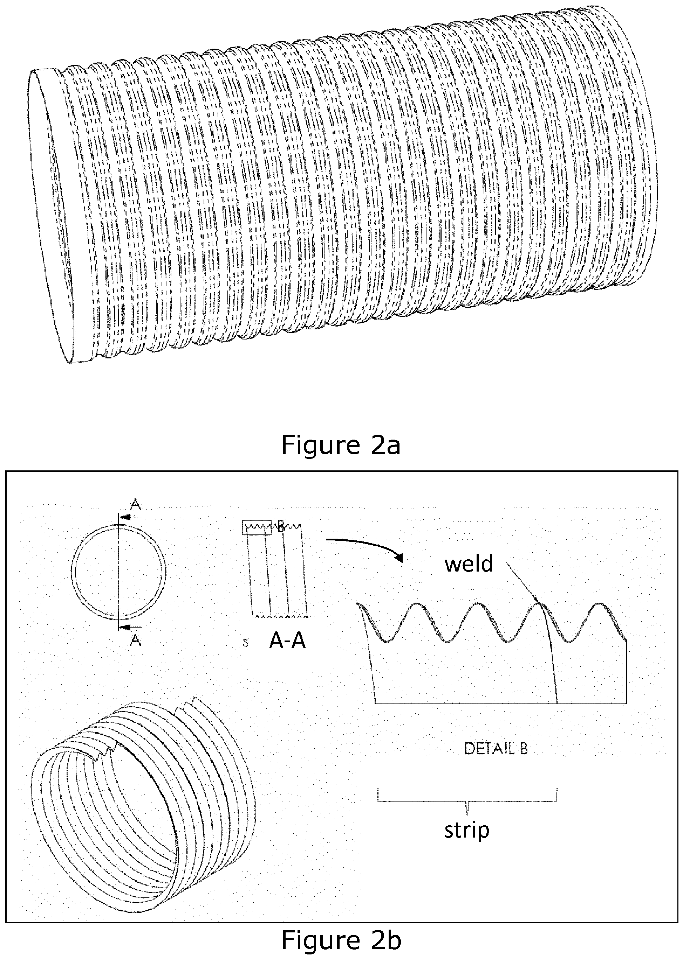

In figure 2a the tube with circumferential beads in the surface of the tube is shown. This tube may be formed from roll-formed strip provided with both the beads and the curvature to form the tube and (e.g.) welded into rings as short-tube-segments which can then be linked together to form a tube segment. In another embodiment the strip is provided with both the beads and the curvature to form the tube and spiral-welded into a tube segment. This is shown in figure 2b. In this case the beads will be helical beads. The beads in figure 2a and b are sine-shaped so that the tangent in the trough and top of the bead is zero, and the beads have no discontinuities.

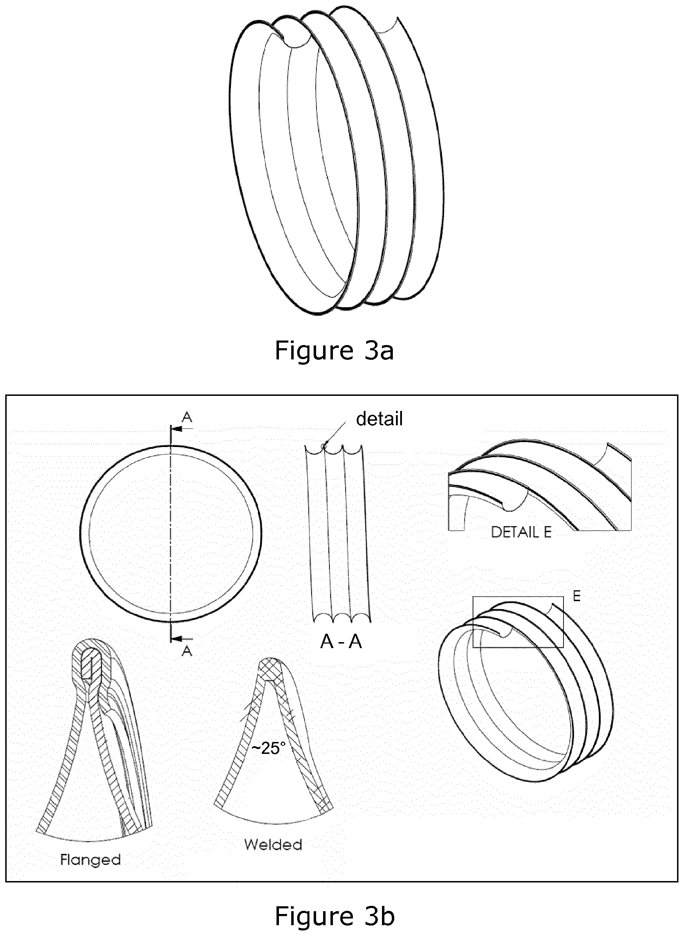

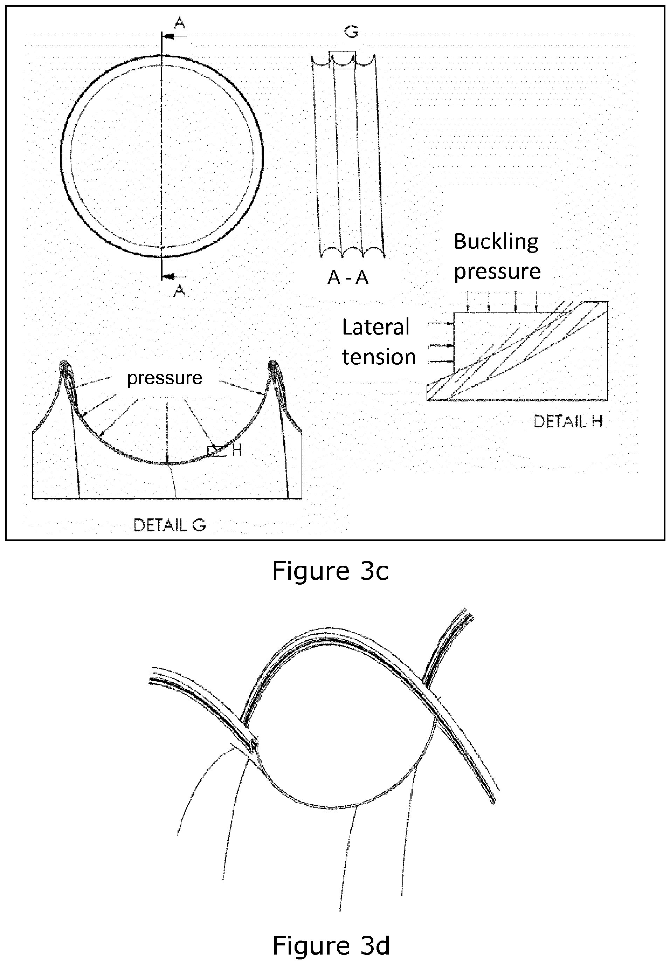

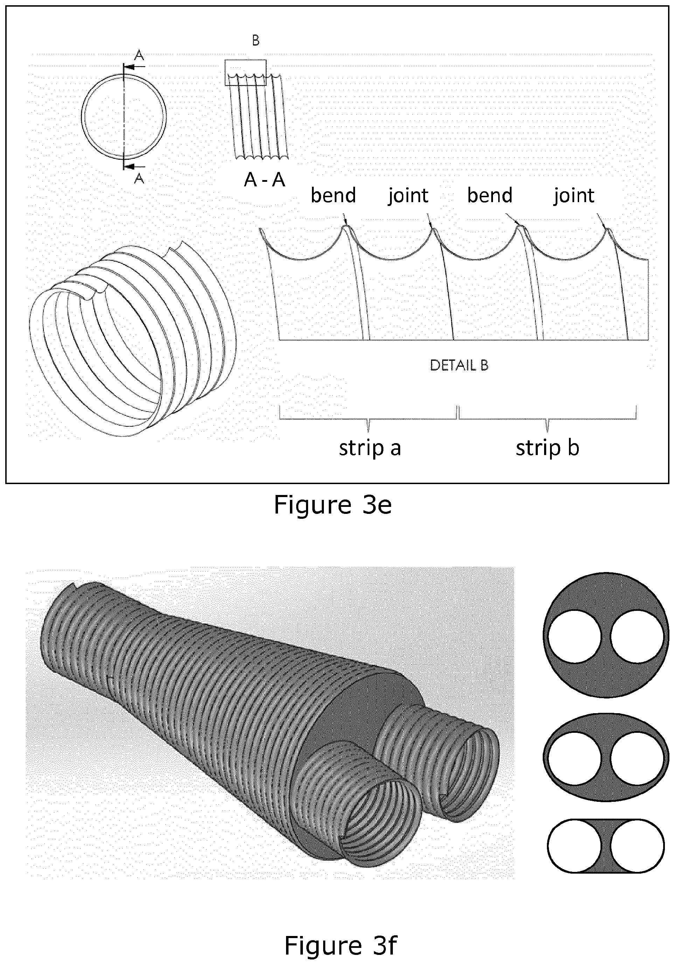

In figure 3a three rings of a tube segment is shown which consists of a helix of catenoid-shaped profiles joined together at the outer edges of the catenoid. The catenoid in this case is not a gravity shaped catenoid because in physics a catenary is the curve that an idealized hanging chain or cable assumes under its own weight when supported only at its ends. In this example the catenary forming the catenoid is the curve that an idealized (weightless) membrane would assume under the pressure of the air acting upon the membrane on one end with a vacuum on the other side. This is depicted in detail G of figure 3c, and the consequence of this shape is that the pressure exerted by the air on the vacuum tube ensures that the material experiences a tension force in the longitudinal direction and a compression load in the radial direction which ensure an excellent dimensional stability of the tube and resistance to buckling (see detail H in figure 3c).

Figure 3b shows in detail two different ways in which the adjoining profiles can be joined together at the edges. The left image ("Flanged") shows a flanged connection, wherein one edge of a profile is flanged over the edges of the adjoining profile. The flanged connection, if properly performed, is airtight as any food can will show, but to be sure of airtightness a sealing compound can be used to seal the flanged connection, either by incorporating the sealing compound in the flanged connection itself, or by applying the compound onto the flange, preferably from the inside of the tube, indicated by the dashed arrow in the drawing. An alternative for the flanged connection is to weld the two edges of the adjoining profiles together. This is shown in the right image ("Welded"). A weld is airtight, if properly performed, but a sealing compound could be used to make sure in the same way as with the flanged connection. The angle between the two adjoining edges is about 25° in this example.

Figure 3d shows a detail of the flanged section. An alternative for this helical shape consisting of single loops is helical shape consisting of a plurality of loops. In figure 3d a double loop helical shape is shown. Detail B shows that one of the tops is a bend, and the next is a joint. So the adjoining profiles (in this case) show two troughs, one top and to upstanding edges. Of course this can also be done with three or more troughs. The number of joints is thus reduced.

Figure 3f shows that this concept can also be used for switches. From the left one tube enters the switch and the diameter of the tube is increased to such a size that two tubes can exit the switch. The cross section may be circular at the location where two tubes exit the switch, but the cross section may also be flattened towards an ellipsoid, or even flatter. Schematic representations of this are given at the right hand side of figure 3f.

Figure 4 shows various images of the polyhedral helical tube. In figure 5 a schematic device to produce a polyhedral helical tube according to the invention (i.e. based on the triangles pairs) is drawn. The different steps are as follows:
1. Raw material inspection
2. Uncoiling
3. Optional rough levelling
4. End cutting and butt welding to preceding strip
5. Optional precision levelling
6. Kinking the strip and delivering to welding
7. Welding
8. Optional cleaning, deburring & overall inspection
9. Optional detailed inspection (e.g. X-ray inspection, Scanning)
11. Optional vacuum testing
12. Optional length-measuring and weighing
13. Optional coating and marking
14. Storage

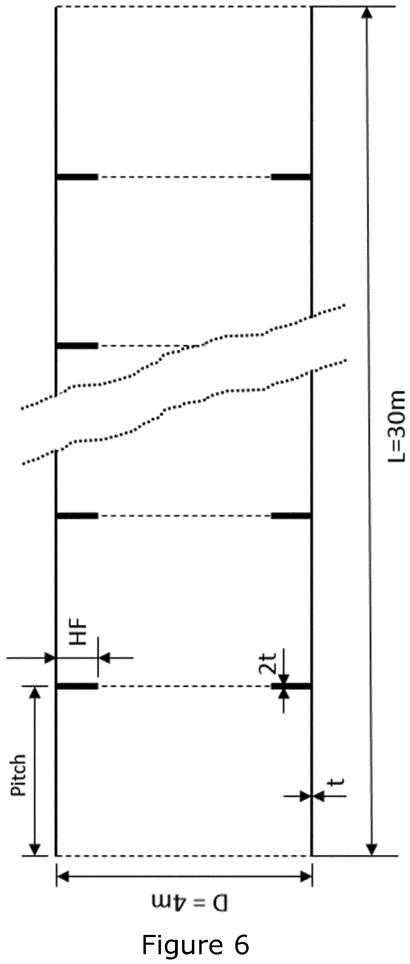

Figure 6 shows a longitudinal cross-section of a 30 m long tube segment with internal ring-like flanges having a flange height HF and a thickness 2t, meaning that the flange consists of two times the thickness of the tube wall, which is t. The pitch is the distance between two subsequent internal flanges.

## Claims

1. Evacuated tube transport system tube, which in use is near vacuum, comprising a plurality of tube segments (1) with an internal diameter of at least 3 m, wherein the tube segments consist of a single-walled metal tube and wherein the surface of the tube is provided with protruding or intruding reinforcements against buckling.

2. Tube according to claim 1 wherein one or more of the tube segments is a polyhedral helical tube consisting of spiral-welded strip, which strip consists of pairs of equal triangles, wherein each pair of triangles forms a parallelogram wherein two of the parallel edges of the parallelogram are parallel to the edges of the strip and wherein the other two parallel edges of the parallelogram and a diagonal of the parallelogram is kinked consecutively upwardly and downwardly and wherein the reinforcements against buckling are the kinks.

3. Tube according to claim 1 wherein one or more of the tube segments is a spiral-welded tube segments wherein the strips to be spiral-welded together are provided with upstanding flanges along the length of the long edges of the strip, preferably along the entire length, and wherein the flanges are welded together to form one upstanding spiralling flange which forms the reinforcements against buckling.

4. Tube according to claim 3 wherein the upstanding spiralling flange is located on the interior surface of the spiral-welded tube segment.

5. Tube according to claim 3 wherein the upstanding spiralling flange is located on the exterior surface of the spiral-welded tube segment.

6. Tube according to claim 1 wherein the reinforcements against buckling are circumferential flanges in the interior of the tube segment.

7. Tube according to claim 6 wherein the pitch of the flanges is at least 25% of the internal radius of the tube segment.

8. Tube according to claim 6 or 7 wherein the height of the flanges is at least 2%, and at most 7.5% of the internal radius of the tube segment.

9. Tube according to claim 6, 7 or 8 wherein the flanges are formed by bending or forcing the edges of short tube segments into flanges.

10. Tube according to claim 1 wherein the reinforcements against buckling are circumferential or helical beads in the surface of the tube segment.

11. Tube according to claim 10 wherein the tangent in the top and trough of the bead in the longitudinal direction of the tube segment is zero, preferably wherein the cross-section of the beads is sine-shaped.

12. Use of an evacuated tube transport system tube according to any one of claims 1 to 11 in an evacuated tube transport system wherein the pressure inside the tube is less than 10 kPa.

13. Method of producing the tube segment according to claim 2 wherein a strip is optionally levelled, optionally end cut and welded to a preceding strip, provided with kinks so as to form pairs of equal triangles, wherein each pair of triangles forms a parallelogram wherein two of the parallel edges of the parallelogram are parallel to the edges of the strip and wherein the other two parallel edges of the parallelogram and a diagonal of the parallelogram is kinked consecutively upwardly and downwardly, spiral welding the strip to form an polyhedral helical tube.

## Patentansprüche

1. Vakuumröhren-Transportsystemrohr, das im Gebrauch nahe dem Vakuum ist, umfassend eine Vielzahl von Rohrsegmenten (1) mit einem Innendurchmesser von mindestens 3 m, wobei die Rohrsegmente aus einem einwandigen Metallrohr bestehen und wobei die Oberfläche des Rohrs mit hervorstehenden oder intrudierenden Verstärkungen gegen Wölbung versehen ist.

2. Rohr nach Anspruch 1, wobei eines oder mehrere der Rohrsegmente ein polyedrisches schraubenförmiges Rohr ist, das aus einem spiralförmig geschweißten Streifen besteht, der Streifen aus Paaren gleicher Dreiecke besteht, wobei j edes Paar von Dreiecken ein Parallelogramm bildet, wobei zwei der parallelen Kanten des Parallelogramms parallel zu den Kanten des Streifens sind und wobei die anderen zwei parallelen Kanten des Parallelogramms und eine Diagonale des Parallelogramms nacheinander nach oben und nach unten geknickt sind und wobei die Verstärkungen gegen Wölbung die Knicke sind.

3. Rohr nach Anspruch 1, wobei eines oder mehrere der Rohrsegmente spiralförmig geschweißte Rohrsegmente sind, wobei die spiralförmig zusammenzuschweißenden Streifen mit aufrechten Flanschen entlang der Länge der langen Kanten des Streifens, vorzugsweise entlang der gesamten Länge, versehen sind, und wobei die Flansche zusammengeschweißt sind, um eine aufrechten, Spiralflansch zu bilden, der die Verstärkungen gegen Wölbung bildet.

4. Rohr nach Anspruch 3, wobei sich der aufrecht stehende Spiralflansch an der inneren Oberfläche des spiralgeschweißten Rohrsegments befindet.

5. Rohr nach Anspruch 3, wobei sich der aufrecht stehende Spiralflansch an der äußeren Oberfläche des spiralgeschweißten Rohrsegments befindet.

6. Rohr nach Anspruch 1, wobei die Verstärkungen gegen Wölbung umlaufende Flansche im Inneren des Rohrsegments sind.

7. Rohr nach Anspruch 6, wobei der Abstand der Flansche mindestens 25 % des Innenradius des Rohrsegments ist.

8. Rohr nach Anspruch 6 oder 7, wobei die Höhe der Flansche mindestens 2 % und höchstens 7,5 % des Innenradius des Rohrsegments ist.

9. Rohr nach Anspruch 6, 7 oder 8, wobei die Flansche durch Biegen oder Pressen der Kanten des kurzen Rohrsegmentes zu Flanschen geformt werden.

10. Rohr nach Anspruch 1, wobei die Verstärkungen gegen Wölbung umlaufende oder schraubenförmige Sicken in der Oberfläche des Rohrsegments sind.

11. Rohr nach Anspruch 10, wobei der Tangens in der Oberseite und Mulde der Sicke in Längsrichtung des Rohrsegments Null ist, vorzugsweise wobei der Querschnitt der Sicken sinusförmig ist.

12. Verwendung eines Vakuumröhren-Transportsystemrohrs nach einem der Ansprüche 1 bis 11 in einem Vakuumröhren-Transportsystem, wobei der Druck im Inneren des Rohrs weniger als 10 kPa ist.

13. Verfahren zur Herstellung des Rohrsegments nach Anspruch 2, wobei ein Streifen optional gerichtet, optional endgeschnitten und mit einem vorhergehenden Streifen verschweißt wird, mit Knicken versehen wird, um Paare gleicher Dreiecke zu bilden, wobei jedes Paar von Dreiecken ein Parallelogramm bildet, wobei zwei der parallelen Kanten des Parallelogramms parallel zu den Kanten des Streifens sind und wobei die anderen zwei parallelen Kanten des Parallelogramms und eine Diagonale des Parallelogramms nacheinander nach oben und nach unten geknickt werden, wobei der Streifen spiralförmig verschweißt wird, um ein polyedrisches schraubenförmiges Rohr zu bilden.

## Revendications

1. Tube de système de transport à tube sous vide, qui lors de l'utilisation est proche du vide, comprenant une pluralité de segments de tube (1) avec un diamètre interne supérieur ou égal à 3 m, lesdits segments de tube étant constitués d'un tube métallique à paroi unique et ladite surface du tube étant dotée de renforts saillants ou entrant contre le flambement.

2. Tube selon la revendication 1, un ou plusieurs des segments de tube étant un tube hélicoïdal polyédrique constitué d'une bande soudée en spirale, laquelle bande étant constituée de paires de triangles égaux, chaque paire de triangles formant un parallélogramme, deux des bords parallèles du parallélogramme étant parallèles aux bords de la bande et lesdits deux autres bords parallèles du parallélogramme et une diagonale du parallélogramme étant pliés consécutivement vers le haut et vers le bas et lesdits renforts contre le flambage étant des plis.

3. Tube selon la revendication 1, un ou plusieurs des segments de tube étant des segments de tube soudés en spirale, lesdites bandes à souder ensemble en spirale étant dotées de rebords verticaux le long de la longueur des bords longs de la bande, de préférence le long de toute la longueur, et lesdits rebords étant soudés ensemble pour former un rebord en spirale vertical qui forme les renforts contre le flambement.

4. Tube selon la revendication 3, ledit rebord en spirale vertical étant situé sur la surface intérieure du segment de tube soudé en spirale.

5. Tube selon la revendication 3, ledit rebord en spiral vertical étant situé sur la surface extérieure du segment de tube soudé en spirale.

6. Tube selon la revendication 1, lesdits renforts contre le flambement étant des rebords circonférentiels à l'intérieur du segment de tube.

7. Tube selon la revendication 6, ledit pas des rebords étant supérieur ou égal à 25 % du rayon interne du segment de tube.

8. Tube selon la revendication 6 ou 7, ladite hauteur des rebords étant supérieure ou égale à 2 % et inférieure ou égale à 7,5 % du rayon interne du segment de tube.

9. Tube selon la revendication 6, 7 ou 8, lesdits rebords étant formés en pliant ou en forçant les bords de segments de tube courts en rebords.

10. Tube selon la revendication 1, lesdits renforts contre le flambement étant des bourrelets circonférentiels ou hélicoïdaux dans la surface du segment de tube.

11. Tube selon la revendication 10, ladite tangente dans le sommet et la dépression du bourrelet dans la direction longitudinale du segment de tube étant nulle, de préférence ladite section transversale des bourrelets étant de forme sinusoïdale.

12. Utilisation d'un tube de système de transport à tube sous vide selon l'une quelconque des revendications 1 à 11 dans un système de transport à tube sous vide, ladite pression à l'intérieur du tube étant inférieure à 10 kPa.

13. Procédé de fabrication du segment de tube selon la revendication 2, une bande étant éventuellement arasée, éventuellement coupée en bout et soudée à une bande précédente, dotée de plis de façon à former des paires de triangles égaux, chaque paire de triangles formant un parallélogramme, deux des bords parallèles du parallélogramme étant parallèles aux bords de la bande et lesdits deux autres bords parallèles du parallélogramme et une diagonale du parallélogramme étant pliés consécutivement vers le haut et vers le bas, la soudure en spirale de la bande pour former un tube hélicoïdal polyédrique.
